# EUROPEAN PATENT APPLICATION

(11) **EP 4 472 013 A1**
(43) Date of publication of application: **04.12.2024**
(21) Application number: 23202994.2
(22) Date of filing: 11.10.2023
(51) Int. Cl.: H02J 7/00

(54) **CHARGING METHOD AND APPARATUS, AND NON-TRANSITORY COMPUTER-READABLE STORAGE MEDIUM**

(30) Priority: 31.05.2023 CN 202310637863
(71) Applicant: Beijing Xiaomi Mobile Software Co., Ltd., Beijing 100085 (CN)
(72) Inventor: REN, Hang, Beijing 100085 (CN); LI, Yunteng, Beijing 100085 (CN)
(74) Representative: dompatent von Kreisler Selting Werner - Partnerschaft von Patent- und Rechtsanwälten mbB

(57) **Abstract**

A charging method applied to a power supply device is provided. The charging method includes: sending a first signal to a device to be charged through a single-wire channel in response to determining that a power supply device is connected with the device to be charged, the first signal being configured to represent a target charging protocol supported by the power supply device; receiving a second signal sent by the device to be charged through the single-wire channel, the second signal being a signal that the device to be charged responds to the first signal when it is determined to support the target charging protocol; and determining that the device to be charged supports the target charging protocol in response to receiving the second signal, and charging the device to be charged based on the target charging protocol.

## Description

### TECHNICAL FIELD

The present disclosure relates to the field of charging of smart terminals, and more specifically, to a charging method and apparatus, and a storage medium.

### BACKGROUND

With the continuous improvement of the performance of smart terminals, the power consumption of smart terminals is increasing, so is the battery capacity. Under the rising demand for fast charging of smart terminals, various terminal manufacturers have developed their own fast charging protocols in recent years, including fast charging protocols based on D+/D- (Data+/Data-) channel communication.

### SUMMARY

In order to overcome the problems existing in the related technologies, the present disclosure provides a charging method and apparatus, and a storage medium.

According to a first aspect of the present disclosure, there is provided a charging method, applied to a power supply device, including: sending a first signal to a device to be charged through a single-wire channel in response to determining that the power supply device is connected with the device to be charged, the first signal being configured to represent a target charging protocol supported by the power supply device; receiving a second signal sent by the device to be charged through the single-wire channel, the second signal being a signal that the device to be charged responds to the first signal when it is determined to support the target charging protocol; and determining that the device to be charged supports the target charging protocol in response to receiving the second signal, and charging the device to be charged based on the target charging protocol.

According to a second aspect of the present disclosure, there is provided a charging method, applied to a device to be charged, including: receiving a first signal, the first signal being sent through a single-wire channel in response to determining that a power supply device is triggered to charge a device to be charged, and the first signal being configured to represent a target charging protocol supported by the power supply device; sending a second signal to the power supply device through the single-wire channel in response to that the device to be charged supports the target charging protocol, the second signal being a signal that the device to be charged responds to the first signal when it is determined to support the target charging protocol; and performing charging based on the target charging protocol.

According to a third aspect of the present disclosure, there is provided a charging apparatus, including: a processor; a memory for storing instructions executable by the processor; where the processor is configured to perform: sending a first signal to a device to be charged through a single-wire channel in response to determining that a power supply device is connected with the device to be charged, the first signal being configured to represent a target charging protocol supported by the power supply device; receiving a second signal sent by the device to be charged through the single-wire channel, the second signal being a signal that the device to be charged responds to the first signal when it is determined to support the target charging protocol; and determining that the device to be charged supports the target charging protocol in response to receiving the second signal, and charging the device to be charged based on the target charging protocol.

According to a fourth aspect of the present disclosure, there is provided a charging apparatus, including: a processor; a memory for storing instructions executable by the processor; where the processor is configured to implement the charging method according to the second aspect or any embodiment of the second aspect described above.

According to a fifth aspect of the present disclosure, there is provided a non-transitory computer-readable storage medium, having stored thereon instructions, wherein the instructions are executed by a processor of a power supply device, enabling the power supply device to execute the charging method in the first aspect or any embodiment of the first aspect described above.

According to a sixth aspect of the present disclosure, there is provided a storage medium, having stored thereon instructions, wherein the instructions are executed by a processor of a device to be charged, enabling the device to be charged to execute the charging method in the second aspect or any embodiment of the second aspect described above.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of the description, illustrate embodiments consistent with the present disclosure and, together with the description, serve to explain the principles of the present disclosure.
FIG. 1 is a flowchart of a charging method shown according to an embodiment of the present disclosure.
FIG. 2A is a flowchart of a charging method shown according to an embodiment of the present disclosure.
FIG. 2B is a flowchart of a charging method shown according to an embodiment of the present disclosure.
FIG. 3 is a flowchart of a charging method shown according to an embodiment of the present disclosure.
FIG. 4A is a flowchart of receiving a second signal sent by a device to be charged through a single-wire channel shown according to an embodiment of the present disclosure.
FIG. 4B is a flowchart of receiving a second signal sent by a device to be charged through a single-wire channel shown according to an embodiment of the present disclosure.
FIG. 5A is a flowchart of a charging method shown according to an embodiment of the present disclosure.
FIG. 5B is a flowchart of a charging method shown according to an embodiment of the present disclosure.
FIG. 6 is a flowchart of a charging method shown according to an embodiment of the present disclosure.
FIG. 7A is a flowchart of a charging method shown according to an embodiment of the present disclosure.
FIG. 7B is a flowchart of a charging method shown according to an embodiment of the present disclosure.
FIG. 8 is a schematic diagram of a handshake method of a target charging protocol based on single-wire channel communication shown according to an embodiment of the present disclosure.
FIG. 9 is a schematic diagram of a handshake method compatible with a communication protocol shown according to an embodiment of the present disclosure.
FIG. 10 is a schematic diagram of a charging method shown according to an embodiment of the present disclosure.
FIG. 11 is a schematic diagram of a charging method shown according to an embodiment of the present disclosure.
FIG. 12 is a block diagram of a charging apparatus shown according to an embodiment of the present disclosure.
FIG. 13 is a block diagram of a charging apparatus shown according to an embodiment of the present disclosure.
FIG. 14 is a block diagram of a device for charging shown according to an embodiment of the present disclosure.

### DETAILED DESCRIPTION

Description will now be made in detail to embodiments, examples of which are illustrated in the accompanying drawings. The following description refers to the accompanying drawings in which the same numbers in different drawings represent the same or similar elements unless otherwise indicated. The implementations in the following description of embodiments do not represent all implementations consistent with the present disclosure.

With the continuous improvement of the performance of smart terminals, the power consumption of smart terminals is increasing, so is the battery capacity. Under the rising demand for fast charging of smart terminals, various terminal manufacturers have developed their own fast charging protocols in recent years.

At present, the fast charging protocols developed by various terminal manufacturers are fast charging protocols based on D+/D- (Data+/Data-) channel communication.

However, because the process of USB2.0 data transmission is also realized based on the charging protocol of D+/D- (Data+/Data-) channel communication, the charging protocols based on D+/D- (Data+/Data-) channel communication are not compatible with fast charging and USB2.0 data transmission, such that the user's experience in the fast charging and USB2.0 data transmission scenario is affected.

In view of this, the present disclosure provides a charging method, and through the charging communication of the single-wire channel, the channels required for communication are reduced, and the D+/D- (Data+/Data-) channels are not occupied. Moreover, through the protocol based on single-wire channel communication of the present disclosure, compatibility with other charging communication protocols can be realized, thus a scenario of simultaneously performing fast charging and USB2.0 data transmission can be realized, and the user experience can be improved.

Herein, the charging method provided by the present disclosure is mainly applied to a power supply device and a device to be charged. The device to be charged is quickly charged through the protocol based on single-wire channel communication. Herein, the device to be charged in the present disclosure can be a smart phone, and can also be extended to other smart mobile terminals, to which the present disclosure makes no specific limitations.

In addition, the charging method provided by the embodiments of the present disclosure is mainly applied to the normal charging scenario of smart phones, and can also be extended to the charging scenario of other smart mobile terminals, to which the present disclosure makes no specific limitations.

The charging method provided in the following embodiments is applied to a power supply device.

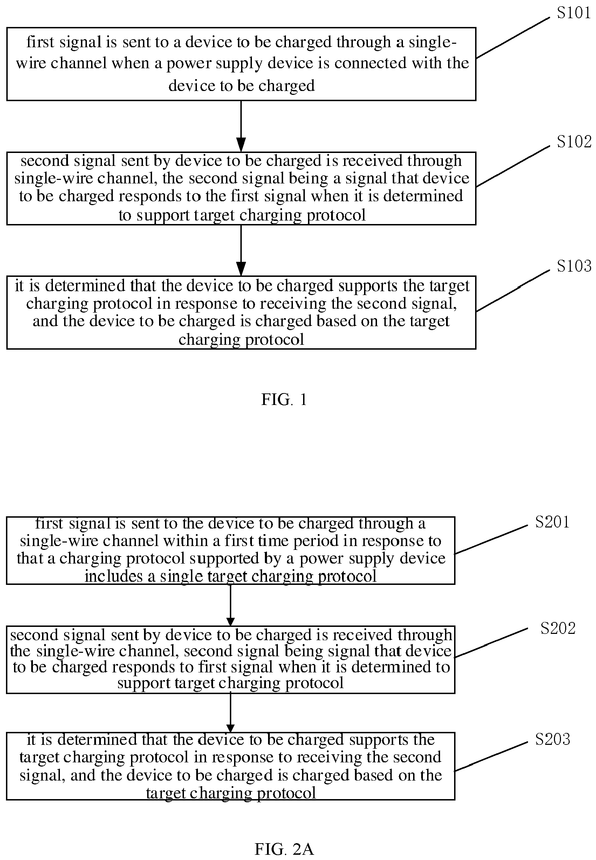

FIG. 1 is a flowchart of a charging method shown according to an embodiment, and as shown in FIG. 1, the method is applied to a power supply device and includes the following steps.

In step S101, a first signal is sent to a device to be charged through a single-wire channel when a power supply device is connected with the device to be charged.

In the embodiments of the present disclosure, the first signal is configured to represent a target charging protocol supported by the power supply device. The target charging protocol is a protocol based on single-wire channel communication provided by the present disclosure.

In an embodiment, the device to be charged can determine that the power supply device supports the target charging protocol when the device to be charged receives the first signal through the single-wire channel.

Herein, the precondition for the power supply device to be triggered to charge the device to be charged is that connection between the power supply device and the device to be charged is established through a USB cable.

In an embodiment, the power supply device is triggered to charge the device to be charged after the power supply device and the device to be charged are connected through a USB cable.

Furthermore, taking the connection of a USB Type-C cable as an example, the specific implementation of how to determine the power supply device to supply power to the device to be charged when the power supply device is connected with the device to be charged is as follows:

DFP (downlink port) is the port of the power supply device, and UFP (uplink port) is the port of the device to be charged. There is a pull-up resistor on the Configuration Channel (CC) channel in DFP, and accordingly there is a corresponding pull-down resistor in UFP. VBUS has no output prior to DFP and UFP are connected, DFP detects that the level of the CC pin is pulled down when DFP and UFP are connected, then DFP recognizes that the UFP device has been connected and turns on the MOSFET on VBUS to supply power to the UFP device.

In step S 102, a second signal sent by the device to be charged is received through the single-wire channel, the second signal being a signal that the device to be charged responds to the first signal when it is determined to support the target charging protocol.

In an embodiment, after the power supply device sends the first signal of the supported target charging protocol to the device to be charged through the single-wire channel, it can be determined that the device to be charged also supports the target charging protocol if the second signal sent by the device to be charged is received through the single-wire channel within a very short time.

In step S103, it is determined that the device to be charged supports the target charging protocol in response to receiving the second signal, and the device to be charged is charged based on the target charging protocol.

The power supply device can determine that the device to be charged supports the target charging protocol when the power supply device receives the second signal sent by the device to be charged, and fast charging is performed to the device to be charged through the determined target charging protocol.

In the embodiments of the present disclosure, mutual transmission of different signals is realized between the power supply device and the device to be charged based on the single-wire channel.

Through the above embodiments, the target charging protocol based on the single-wire channel communication can reduce the channels required for the communication, and the single-wire channel does not occupy the D+D- channels, which is helpful to realize the scenario of simultaneously performing fast charging and USB2.0 data transmission, and the user experience is improved.

In an embodiment, the first signal is sent to the device to be charged through the single-wire channel within a first time period.

In response to that the power supply device is triggered to charge the device to be charged, based on sending the first signal to the device to be charged through the single-wire channel within a first time period, it facilitates establishing a target charging protocol based on single-wire channel communication between the device to be charged and the power supply device, and the target charging protocol is a fast charging protocol.

In an embodiment, when the protocol supported by the power supply device includes the target charging protocol and other charging protocols different from the target charging protocol. The first signal determined based on the target charging protocol is sent before the signals of other charging protocols are sent, that is, it is sent to the device to be charged through a single-wire channel, so as to avoid a conflict between the first signal and the signals of other charging protocols, which inhibits the establishment of communication.

In an embodiment, waiting for a second time period after the power supply device sends the first signal to the device to be charged through the single-wire channel within the first time period.

In the embodiments of the present disclosure, an action to be performed by the power supply device within the second time period is determined according to the charging protocol supported by the power supply device.

In an embodiment, the second time period is determined based on the communication time period if the charging protocol supported by the power supply device includes the target charging protocol, and the communication time period is the time period for the power supply device to communicate with the device to be charged and trigger the device to be charged to send the second signal.

In an example, in the embodiments of the present disclosure, the communication time period can be an average value, a median value, or a maximum value, etc. derived from the communication time period data of a plurality of tests, and the second time period is determined based on the communication time period, so as to avoid waiting for too long. Herein, the communication time period data of the tests can be historical data.

In another example, in the embodiments of the present disclosure, the communication time period can be determined based on the actual communication time period.

FIG. 2A is a flowchart of another charging method shown according to an embodiment, and as shown in FIG. 2A, the method includes the following steps.

In step S201, a first signal is sent to the device to be charged through a single-wire channel within a first time period in response to that a charging protocol supported by a power supply device includes a single target charging protocol.

In an embodiment, in case that the first time period is 0 to 100 milliseconds, the power supply device sends the first signal to the device to be charged within 0 to 100 milliseconds through the single-wire channel.

In step S202, a second signal sent by the device to be charged is received through the single-wire channel, the second signal being a signal that the device to be charged responds to the first signal when it is determined to support the target charging protocol.

Herein, as for the specific implementation of step S202, reference can be made to the specific implementation of step S 102 in FIG. 1, and details will not be explained here.

In step S203, it is determined that the device to be charged supports the target charging protocol in response to receiving the second signal, and the device to be charged is charged based on the target charging protocol.

Herein, as for the specific implementation of step S203, reference can be made to the specific implementation of step S103 in FIG. 1, and details will not be explained here.

In an embodiment, the power supply device waits for a second time period after sending the first signal to the device to be charged through the single-wire channel within the first time period. Within the second time period, the power supply device tries to establish communication based on the target charging protocol with the device to be charged, that is, the device to be charged is triggered through the sent first signal to send the second signal.

In the embodiments of the present disclosure, the first signal is sent to the device to be charged within a very short time when the power supply device is triggered to charge the device to be charged, which facilitates quickly establishing the target charging protocol between the power supply device and the device to be charged, so as to realize fast charging.

In an embodiment, the second time period is determined based on a time period of sending a third signal by the power supply device if the charging protocol supported by the power supply device includes a first charging protocol and a second charging protocol, and the third signal is configured to represent the second charging protocol. Herein, the first charging protocol in the embodiment of the present disclosure is substantially the same as the target charging protocol in the above-mentioned embodiments, and thus the second charging protocol is also substantially the same as the other charging protocols different from the target charging protocol in the above-mentioned embodiments. Therefore, the first charging protocol and the target charging protocol, the second charging protocol and the other charging protocols different from the target charging protocol can be equivalently replaced in the present disclosure.

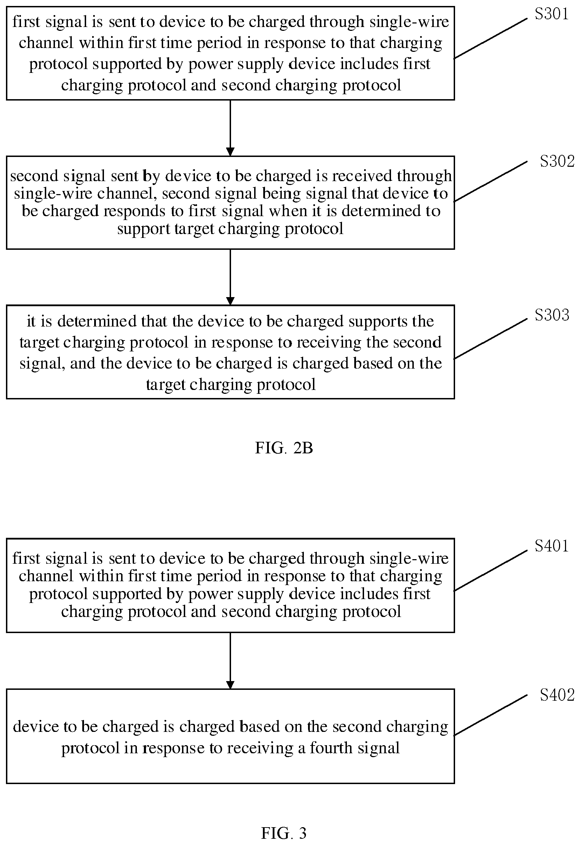

FIG. 2B is a flowchart of a charging method shown according to an embodiment, and as shown in FIG. 2B, the method includes the following steps.

In step S301, a first signal is sent to the device to be charged through a single-wire channel within a first time period in response to that a charging protocol supported by a power supply device includes a first charging protocol and a second charging protocol.

In an embodiment of the present disclosure, the target charging protocol based on single-wire channel communication is compatible with other charging protocols different from the target charging protocol. In this case, the first signal of the power supply device is sent to the device to be charged before a third signal of other charging protocols different from the target charging protocol is sent.

In the embodiments of the present disclosure, other charging protocols different from the target charging protocol can be determined based on their own settings of time for sending protocol signals, and the present disclosure makes no detailed explanations thereto.

In an embodiment, the power supply device sends the third signal to the device to be charged within 100 to 250 milliseconds if the start time for the power supply device to send the third signal is 101 milliseconds. In order to avoid a protocol conflict, the time for the power supply device to send the first signal can be set to 0 to 100 milliseconds, that is, the first time period is 0 to 100 milliseconds.

In step S302, a second signal sent by the device to be charged is received through the single-wire channel, the second signal being a signal that the device to be charged responds to the first signal when it is determined to support the target charging protocol.

Herein, as for the specific implementation of step S302, reference can be made to the specific implementation of step S102 in FIG. 1, and details will not be explained here.

In step S303, it is determined that the device to be charged supports the target charging protocol in response to receiving the second signal, and the device to be charged is charged based on the target charging protocol.

Herein, as for the specific implementation of step S303, reference can be made to the specific implementation of step S103 in FIG. 1, and details will not be explained here.

In an embodiment, since the power supply device supports the target charging protocol and is compatible with other charging protocols different from the target charging protocol, the power supply device waits for a second time period after sending the first signal to the device to be charged through the single-wire channel within the first time period. The power supply device sends a third signal based on other charging protocols different from the target charging protocol to the device to be charged within the second time period.

In an embodiment, the second time period is 100 to 250 milliseconds if the time period for sending the third signal based on other charging protocols different from the target charging protocol is 100 to 250 milliseconds.

In the embodiments of the present disclosure, the power supply device receives a second signal sent by the device to be charged after the power supply device sends a first signal and a third signal to the device to be charged, where the second signal is a signal that the device to be charged responds to the first signal when it is determined to support the target charging protocol. Two situations can be explained: first, the device to be charged only supports the target charging protocol based on the first signal; second, the device to be charged concurrently supports the target charging protocol based on the first signal and other charging protocols based on the third signal different from the target charging protocol, but the device to be charged sets up the priority of the target charging protocol to be higher than the priority of other charging protocols.

Through the above embodiments, the target charging protocol based on single-wire channel communication can reduce the channels needed for communication and save wires, and the target charging protocol based on single-wire channel communication can be realized to be compatible with other charging protocols.

Herein, the third signal is configured to represent other charging protocols different from the target charging protocol, and can be one charging protocol, two charging protocols, etc. The present disclosure makes no specific limitations thereto.

In an embodiment, if the power supply device supports the target charging protocol and is compatible with two other charging protocols different from the target charging protocol, the second time period is determined according to a total time period for sending signals of the two other charging protocols different from the target charging protocol.

Through the above embodiments, the target charging protocol based on single-wire channel communication can reduce the number of channels needed for communication and save wires, and the target charging protocol based on single-wire channel communication can be realized to compatible with other charging protocols.

FIG. 3 is a flowchart of a charging method shown according to an embodiment, and as shown in FIG. 3, the method includes the following steps.

In step S401, a first signal is sent to the device to be charged through a single-wire channel within a first time period in response to that a charging protocol supported by a power supply device includes a first charging protocol and a second charging protocol.

Herein, as for the specific implementation of step S401, reference can be made to the specific implementation of step S301 in FIG. 3, and details will not be explained here.

In step S402, the device to be charged is charged based on the second charging protocol in response to receiving a fourth signal.

In an embodiment of the present disclosure, the fourth signal is a signal that responds to the third signal.

According to the above embodiment, two situations can be explained: first, the device to be charged supports other charging protocols based on the third signal and different from the target charging protocol; second, the device to be charged concurrently supports the target charging protocol based on the first signal and other charging protocols based on the third signal and different from the target charging protocol, but the device to be charged sets up the priority of other charging protocols to be higher than the priority of the target charging protocol.

In another embodiment of the present disclosure, the device to be charged can set up the priority of the charging protocols supported by itself, thus the device to be charged can screen out the charging protocols supported by the device to be charged when the device to be charged receives a plurality of charging protocols sent by the power supply device, and select the most suitable charging protocol according to the priority set by the device to be charged.

The power supply device receives a fourth signal sent by the device to be charged after the power supply device sends the first signal and the third signal to the device to be charged in a time sequence through the single-wire channel, and then the power supply device can determine that the device to be charged supports other charging protocols.

Furthermore, the power supply device receives the fourth signal sent by the device to be charged when the device to be charged supports the target charging protocol and other charging protocols, which can be understood as that the priority of other charging protocols is set up to be higher than the priority of the target charging protocol in advance by the device to be charged according to the target charging protocol and other charging protocols supported by itself.

Through the above embodiments, the target charging protocol based on single-wire channel communication can reduce the channels needed for communication and save wires, and the target charging protocol based on single-wire channel communication can be realized to be compatible with other charging protocols.

In an embodiment, the other charging protocols include at least one of the followings: power delivery PD protocol, power delivery PD private protocol.

While both supporting the target charging protocol, the power supply device and the device to be charged can further be compatible with at least one of the power delivery PD protocol and the power delivery PD private protocol.

In another embodiment, if the other charging protocols compatible with the power supply device are power delivery PD protocols, a first signal is sent to a device to be charged through a single-wire channel within a first time period under the condition that the power supply device is connected with the device to be charged; and a third signal based on the power delivery PD protocol is sent to the device to be charged through the single-wire channel within the second time period.

The priority of the target charging protocol is higher than the priority of other charging protocols if a second signal sent by the device to be charged is received through the single-wire channel. The priority of other charging protocols is higher than the priority of the target charging protocol if a fourth signal sent by the device to be charged is received through the single-wire channel.

Furthermore, after sending the signal, the power supply device waits for a period of time before receiving the signal sent by the device to be charged in response to a certain charging protocol through the single-wire channel.

The following embodiments will mainly explain in detail the reception of the second signal sent by the device to be charged through the single-wire channel.

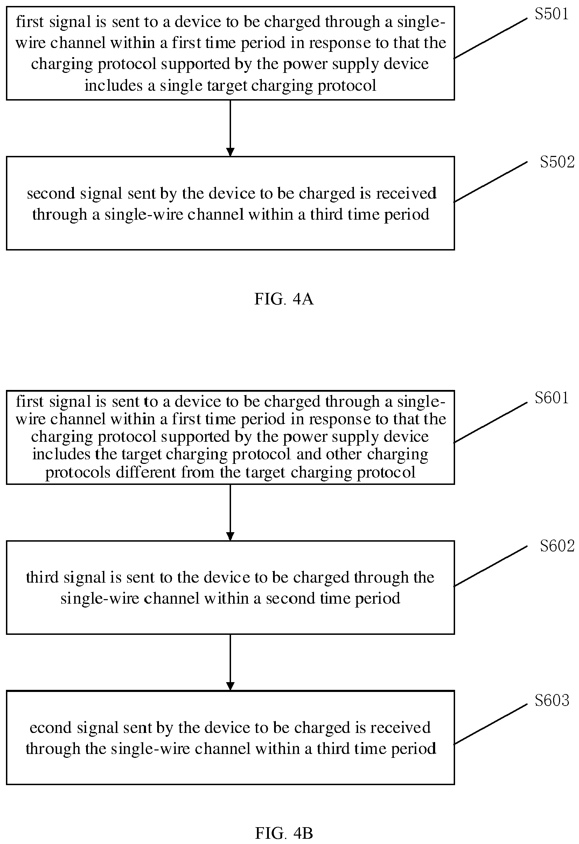

FIG. 4a is a flowchart of receiving a second signal sent by a device to be charged through a single-wire channel shown according to an embodiment, and as shown in FIG. 4a, the method includes the following steps.

In step S501, a first signal is sent to a device to be charged through a single-wire channel within a first time period in response to that the charging protocol supported by the power supply device includes a single target charging protocol.

In step S502, a second signal sent by the device to be charged is received through a single-wire channel within a third time period.

The third time period is a predetermined time period after sending the first signal.

In the embodiments of the present disclosure, if the charging protocol supported by the power supply device only includes the target charging protocol, it means that the power supply device is not compatible with other charging protocols. The power supply device sends a first signal to the device to be charged through a single-wire channel within a first time period, and receives a second signal sent by the device to be charged through a single-wire channel within a third time period.

In an embodiment, for example, the power supply device sends a first signal based on the target charging protocol to the device to be charged through the single-wire channel within 0 to 100 milliseconds, and receives the second signal sent by the device to be charged through the single-wire channel after 100 milliseconds, for example, within 200 to 250 milliseconds.

While the fast charging is realized through the target charging protocol based on single-wire communication between the power supply device and the device to be charged, data transmission with USB2.0 can also be realized, and the user experience is improved.

FIG. 4B is another flowchart of receiving the second signal sent by the device to be charged through the single-wire channel shown according to an embodiment, and as shown in FIG. 4B, the following steps are included.

In step S601, a first signal is sent to a device to be charged through a single-wire channel within a first time period in response to that the charging protocol supported by the power supply device includes the target charging protocol and other charging protocols different from the target charging protocol.

In step S602, a third signal is sent to the device to be charged through the single-wire channel within a second time period.

In step S603, a second signal sent by the device to be charged is received through the single-wire channel within a third time period.

In an embodiment, the power supply device can send a first signal to the device to be charged through the single-wire channel within 0 to 100 milliseconds if the power supply device supports the target charging protocol based on single-wire channel communication and is also compatible with the power delivery PD protocol; and the power supply device can send a third signal to the device to be charged through the single-wire channel within 100 milliseconds to 250 milliseconds. The power supply device can wait for a period of time after 250 milliseconds, such as between 250 and 650 milliseconds, and receive the second signal sent by the device to be charged through the single-wire channel.

While the fast charging is realized through the target charging protocol based on single-wire communication between power supply device and device to be charged, data transmission with USB2.0 can also be realized, and the user experience is improved.

In another embodiment, the power supply device receives a fourth signal sent by the device to be charged through the single-wire channel within a second time period if the priority of other charging protocols supported by the device to be charged is higher than the priority of the target charging protocol. Herein, as for the specific implementation of this embodiment, reference can be made to the implementation of the above-mentioned embodiments, and details will not be explained here.

In yet another embodiment, the first signal is re-sent if the second signal is not received within a third time period.

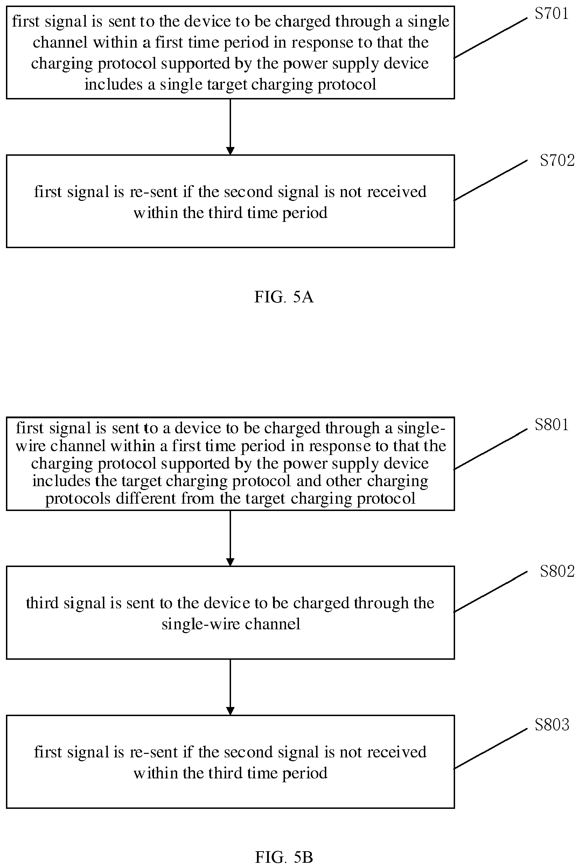

FIG. 5A is a flowchart of a charging method shown according to an embodiment, and as shown in FIG. 5A, the method includes the following steps.

In step S701, a first signal is sent to the device to be charged through a single channel within a first time period in response to that the charging protocol supported by the power supply device includes a single target charging protocol.

In step S702, the first signal is re-sent if the second signal is not received within the third time period.

In an embodiment, if the charging protocol supported by the power supply device includes the target charging protocol, it means that the power supply device is not compatible with other charging protocols. In this case, the power supply device re-sends the first signal if the second signal sent by the device to be charged is not received within the third time period, and the number of times for which the power supply device re-sends the first signal does not exceed two times.

If the power supply device receives the second signal sent by the device to be charged through the single-wire channel after re-sending the first signal for the second time, it is determined that the device to be charged supports the target charging protocol, and the device to be charged is charged based on the target charging protocol.

FIG. 5B is a flowchart of another charging method shown according to an embodiment, and as shown in FIG. 5B, the method includes the following steps.

In step S801, a first signal is sent to a device to be charged through a single-wire channel within a first time period in response to that the charging protocol supported by the power supply device includes the target charging protocol and other charging protocols different from the target charging protocol.

In step S802, a third signal is sent to the device to be charged through the single-wire channel.

In step S803, the first signal is re-sent if the second signal is not received within the third time period.

In the embodiments of the present disclosure, if the target charging protocol based on single-wire channel communication can also be compatible with other charging protocols, in this case, the power supply device re-sends the first signal and the third signal if the response signal sent by the device to be charged is not received within the third time period, and the number of times for which the power supply device resends the first signal cannot exceed three times, the third signal can be re-sent according to its own charging protocol rule, and the present disclosure makes no specific explanations.

Through the target charging protocol based on single-wire channel communication provided by the present disclosure, the compatibility with other charging protocols can be realized.

In an embodiment, the first signal is a square wave signal; the second signal is a level signal used by the power supply device to charge the device to be charged based on the target charging protocol.

In an embodiment, a first signal is formed by pulling up a level of the single-wire channel to a first level and repeating for N times, and the first signal is sent to the device to be charged, and N is a positive integer.

In an embodiment, the second signal is a signal formed by pulling up the level of the single-wire channel to a second level and maintaining the same.

The present disclosure provides a charging protocol based on a single-wire channel, and the single-wire channel can be a CC channel.

Herein, in the embodiments of the present disclosure, the square wave signal is a signal that a handshake waveform 1 determined by the power supply device in the form of a square wave based on the target charging protocol is transmitted from the power supply device to the device to be charged without distortion within the required time.

In a target charging protocol based on single-wire communication provided by the present disclosure, after a first signal is sent to the device to be charged through a single-wire channel within a first time period, if the device to be charged supports the target charging protocol, the device to be charged actively pull up the CC level to a level value according to the level signal used during its own charging, and maintain the level value to form a handshake waveform 2, and it can be understood that the handshake waveform 2 is the second signal.

The charging method provided in the following embodiments is applied to a device to be charged.

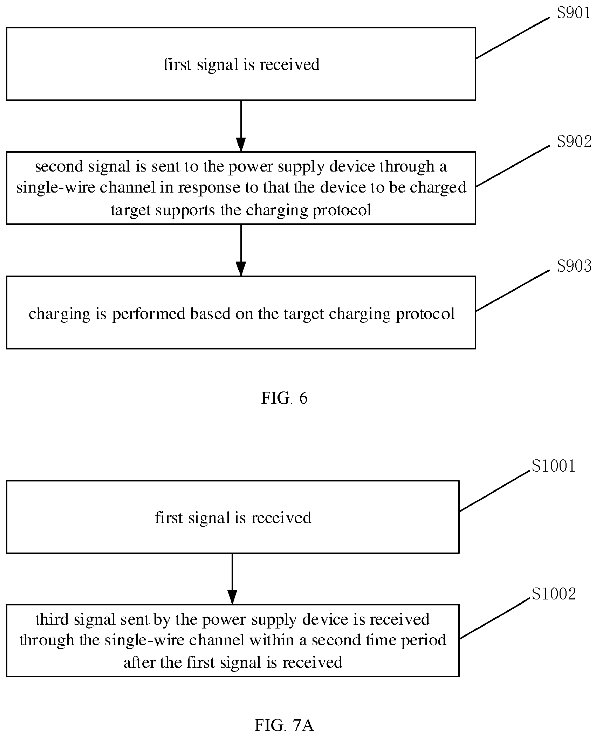

FIG. 6 is a flowchart of a charging method shown according to an embodiment, as shown in FIG. 6, and the method includes the following steps.

In step S901, a first signal is received.

The first signal is sent through a single-wire channel when the power supply device is triggered to charge the device to be charged, and the first signal is configured to represent a target charging protocol supported by the power supply device.

Herein, as for the specific implementation of step S901, reference can be made to the specific implementation of step S 101 in FIG. 1, and details will not be explained here.

In step S902, a second signal is sent to the power supply device through a single-wire channel in response to that the device to be charged target supports the charging protocol.

In the embodiments of the present disclosure, the second signal is a signal that the device to be charged responds to the first signal when it is determined to support the target charging protocol.

In step S903, charging is performed based on the target charging protocol.

In the embodiments of the present disclosure, the device to be charged can determine that the power supply device supports the target charging protocol when the device to be charged receives the first signal sent by the power supply device through the single-wire channel, and the device to be charged sends to the power supply device a second signal responding to the first signal according to a predetermined signal of the target charging protocol if the device to be charged also supports this protocol.

Through the above embodiments, the target charging protocol based on single-wire channel communication can reduce the channels needed for communication, and the single-wire channel does not occupy the D+D- channels, which is helpful to realize the scenario of simultaneously performing fast charging and USB2.0 data transmission, and the user experience is improved.

FIG. 7A is a flowchart of a charging method shown according to an embodiment, and as shown in FIG. 7A, the method includes the following steps.

In step S1001, a first signal is received.

Herein, as for the specific implementation of step S 1001 in the embodiment of the present disclosure, reference can be made to the specific embodiment of step S 101 in FIG. 1, and details will not be explained here.

In step S1002, a third signal sent by the power supply device is received through the single-wire channel within a second time period after the first signal is received.

In the embodiments of the present disclosure, the third signal is configured to represent the second charging protocol.

In the embodiments of the present disclosure, the device to be charged receives the first signal within a first time period.

When the charging protocol supported by the power supply device only includes the target charging protocol, it can be understood that the power supply device is not compatible with other charging protocols. In this case, the first signal can be received when the time is longer than the preparation time for sending the first signal after the power supply device is triggered to charge the device to be charged.

In an embodiment, within the first time period, if the preparation time for sending the first signal after the power supply device is triggered to charge the device to be charged is within 0 to 100 milliseconds, that is, the first time is 0 to 100 milliseconds, the device to be charged receives the first signal sent by the power supply device through the single-wire channel after more than 0 to 100 milliseconds; and if the device to be charged receives the first signal sent by the power supply device within the second time period of more than 0 to 100 to 250ms, after 2 milliseconds, 3 milliseconds, 4 milliseconds... through the single-wire channel, the maximum limit can be 400 milliseconds, and no specific limitations are made.

In the embodiments of the present disclosure, the first signal is received within a very short time, such that it is facilitated to quickly establish the target charging protocol between the power supply device and the device to be charged, so as to realize fast charging.

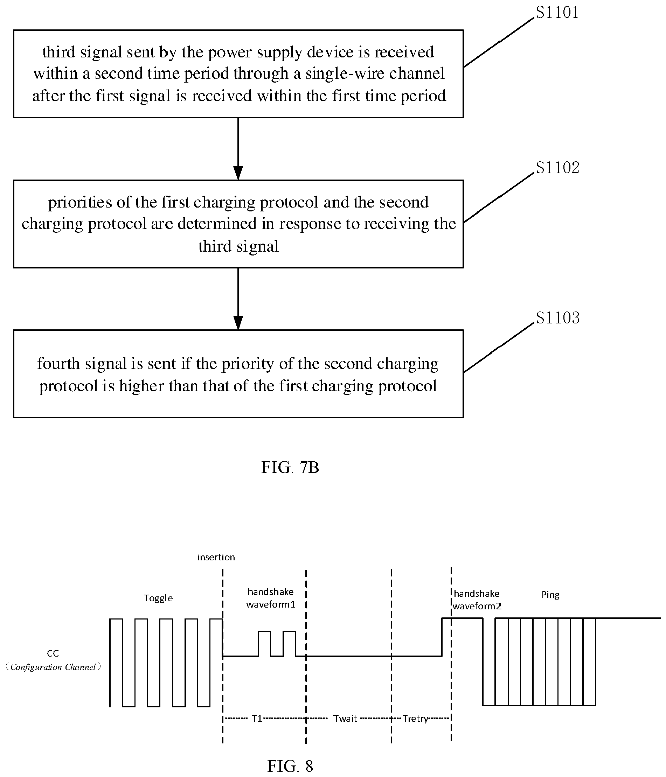

FIG. 7B is a flowchart of a first time period charging method shown according to an embodiment, and as shown in FIG. 7B, the method includes the following steps.

In step S1101, a third signal sent by the power supply device is received within a second time period through a single-wire channel after the first signal is received within the first time period.

In step S1102, priorities of the first charging protocol and the second charging protocol are determined in response to receiving the third signal.

In step S1103, a fourth signal is sent if the priority of the second charging protocol is higher than the priority of the first charging protocol.

In the embodiments of the present disclosure, the fourth signal is a signal that the device to be charged responds to the third signal when it is determined to support the second charging protocol.

The device to be charged can determine that the power supply device supports other charging protocols when receiving the third signal sent by the power supply device through the single-wire channel, and then can determine whether the device to be charged supports other charging protocols, and can also determine the priority of each charging protocol in the device to be charged when the device to be charged supports other charging protocols.

In the embodiments of the present disclosure, the target charging protocol based on single-wire channel communication can also be compatible with other charging protocols, in this case, the priorities of the first charging protocol and the second charging protocol, that is, the priorities of the target charging protocol and other charging protocols, are determined based on the first signal and the third signal received by the device to be charged.

In an embodiment, the device to be charged can set up a priority for the charging protocol that it supports, and when the priority is higher, a response signal responding based on the charging protocol with a higher priority is sent based on this charging protocol with a higher priority to the power supply device.

Through the above embodiment, the target charging protocol based on single-wire channel communication can reduce the channels needed for communication and save wires, and the target charging protocol based on single-wire channel communication can achieve compatibility with other charging protocols.

In another embodiment of the present disclosure, it is determined that the priority of the first charging protocol is higher than the priority of the second charging protocol. Thus, the device to be charged sends the second signal to the power supply device through the single-wire channel.

Through the protocol base on single-wire channel communication of the present disclosure, the compatibility with other charging communication protocols can be realized.

In an embodiment of the present disclosure, the priority can be set up according to the power of each charging protocol. If the power is higher, the priority is higher, which is helpful for the device to be charged to realize fast charging based on the charging protocol with a higher power; alternatively, the priority of the target charging protocol based on single-wire channel communication provided by the present disclosure is set up to be higher than the priority of other charging protocols, which facilitates realizing fast charging based on single-wire channel. It can be known that the priority setting method provided by the present disclosure is not limited to the above two setting methods, and can be specifically set according to the actual situations. The target charging protocol based on single-wire channel communication can reduce the channels needed for communication and save wires, and the target charging protocol based on single-wire channel communication can achieve compatibility with other charging protocols.

In an embodiment, other charging protocols include at least one of the following: power delivery PD protocol, power delivery PD private protocol.

The power supply device and the device to be charged can also be compatible with at least one of the power delivery PD protocol and the power delivery PD private protocol while both supporting the target charging protocol.

In yet another embodiment, if other charging protocols compatible with the device to be charged are power delivery PD protocols, the first signal is received through a single-wire channel within a first time period after the power supply device is triggered to charge the device to be charged; and a third signal based on the power delivery PD protocol is received within a second time period.

The priority of the target charging protocol is set up to be higher than the priority of the power delivery PD protocol by the device to be charged if the second signal is sent to the power supply device through the single-wire channel. The priority of the power delivery PD protocol is set up higher than the priority of the target charging protocol by the device to be charged if the fourth signal is sent to the power supply device through the single-wire channel.

In yet another embodiment, if the device to be charged does not send the second signal within the second time period, the first signal is re-received. The specific implementation of this embodiment can be in accordance with the specific implementation of the embodiment shown in FIGS. 5A and 5B, and details will not be described in detail here.

In an embodiment, the first signal is a square wave signal; the second signal is a level signal used by the power supply device to charge the device to be charged based on the target charging protocol.

In an embodiment, the first signal is formed by pulling up a level of the single-wire channel to a first level and repeating for N times, where N is a positive integer.

In an embodiment, the second signal is a signal generated by pulling up the level of the single-wire channel to a second level and maintaining the same.

The present disclosure provides a charging protocol based on a single-wire channel, and the single-wire channel can be a CC channel.

Herein, in the embodiments of the present disclosure, the square wave signal is a signal that the handshake waveform 1 determined by the power supply device in the form of a square wave based on the target charging protocol is transmitted from the power supply device to the device to be charged without distortion within the required time.

In a target charging protocol based on single-wire communication provided by the present disclosure, after a first signal is sent to the device to be charged through a single-wire channel within a first time period, if the device to be charged supports the target charging protocol, the device to be charged actively pulls up the CC level to a level value according to the level signal used during its own charging, and maintaining the level value to form a handshake waveform 2, and it can be understood that the handshake waveform 2 is the second signal.

The following embodiments will mainly take CC (Configuration Channel) channel as an example, and describe the charging method and target charging protocol provided by the present disclosure in detail. Herein, CC (Configuration Channel) is a newly added key channel in USB Type-C, it has the functions of detecting positive and negative insertion, detecting how much voltage and current can be provided by USB connection identification, and establishing and managing the connection between data between USB devices and VBUS.

Because the fast charging protocols based on D+/D- (Data+/Data-) channel communication developed by various terminal manufacturers are difficult to realize USB2.0 data transmission while realizing fast charging, the present disclosure provides a handshake method of a target charging protocol based on single-wire channel communication. FIG. 8 is a schematic diagram of a handshake method of a target charging protocol based on single-wire channel communication shown according to an embodiment. As shown in FIG. 8, a charging method provided by the present disclosure is prepared by shaking hands with the single-channel communication protocol provided by the present disclosure between the power supply device and the device to be charged.

If the device on the power supply side supports the target charging protocol, the target charging protocol can be called protocol U1. As shown in FIG. 8, the CC channel of the device to be charged is performing toggle. When the power supply device is detected to be inserted, the level of the CC channel changes, and the power supply device actively pulls up the level to V1 within the first time period T1 (0 to 100 milliseconds) after the insertion, and repeat for N times to form a specific handshake waveform 1, where N is an integer greater than 2. At this time, it can be determined that the power supply device supports the specific protocol U1 after the device to be charged receives the waveform. After waiting for a second time period TWAIT (TWAIT > 2ms), if the device to be charged supports the protocol U1, it actively pulls up the CC level to V2 and maintaining the same to form a handshake waveform 2, at this time, the power supply device determines that the device to be charged supports U1, and the charging device and the power supply device at this time have finished shaking hands. Subsequently, the charging device sends a ping message on its own initiative, the power supply device replies with an ack message, and a complete U1 protocol is established, thereafter normal message interaction can be performed and power adjustment can be realized according to the message interaction.

Herein, after Twait, if the second information of the device to be charged, i.e. handshake waveform 2, is not received within the third time length Tretry, the handshake waveform 1 is re-sent for no more than 2 times, where Tretry can be 400 milliseconds.

At present, the PD protocol has been widely used in smart terminals in various device manufacturers. However, due to some customization made by various device manufacturers in the design of PD interface, incompatibility often occurs in the process of matching with third-party accessories. Through the charging method provided by the present disclosure, the compatibility with the power delivery PD protocol and the power delivery PD private protocol for CC channel communication can be realized, and the normal selection of protocols can be realized according to different priority settings. The power supply device and the device to be charged that concurrently support the protocol U1, the power delivery PD protocol and the power delivery PD private protocol of the present disclosure are taken as examples.

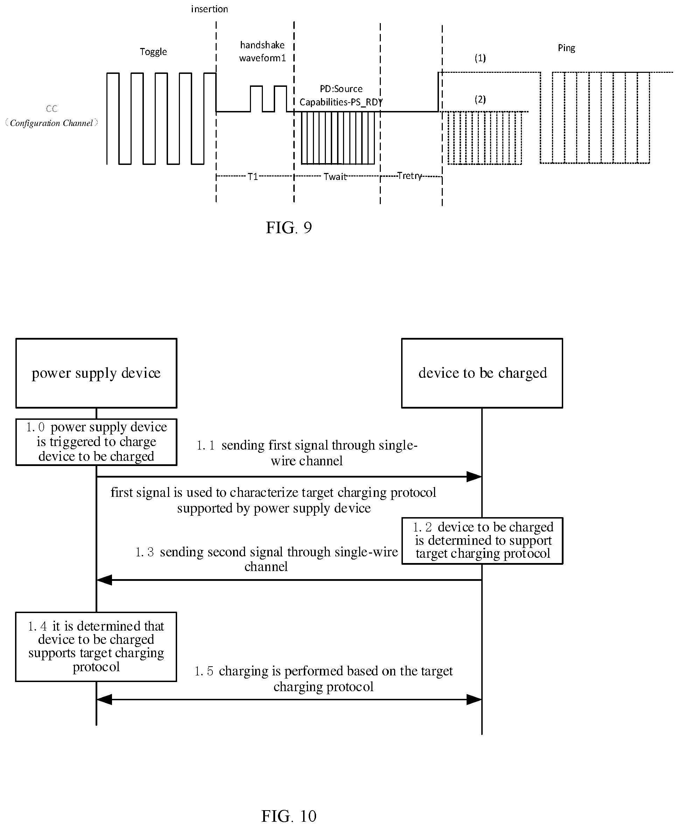

FIG. 9 is a schematic diagram of a handshake method compatible with a communication protocol shown according to an embodiment, as shown in FIG. 9, as for the specific implementation before Twait, reference can be made to the specific implementation of FIG. 8, and details will not be explained in detail here.

The power supply device forms a specific handshake waveform 1 within a first time period T1 when a power supply device is detected to be inserted, in this case, the device to be charged can determine that the power supply device supports a specific protocol U1 after receiving the handshake waveform 1. While waiting within the second time period Twait, which can be 250 milliseconds, the power supply device actively sends Source Capabilities because it supports the power delivery PD protocol, the power supply device normally performs a request because it supports the PD protocol, and the power supply device normally responds to the request and sends PS_RDY after adjusting to the requested voltage.

After the time Twait, because the three protocols, namely, protocol U1, power delivery PD protocol and power delivery PD private protocol, are supported, the device to be charged can choose according to the priority of each charging protocol set by itself. When the priority setting of U1 is the highest, the scheme (1) is taken, the PD protocol is directly disconnected after pulling up the level of CC, and then ping communication is performed to realize establishment of the U1 protocol, and subsequently charging control is performed normally according to the U1 protocol. When the priority based on the power delivery PD protocol is the highest, the scheme (2) is taken, the U1 protocol is disconnected, the communication is performed according to the power delivery PD private protocol, and the power is adjusted. When the priority of the power delivery PD protocol is the highest, the scheme (2) is taken, the U1 protocol is disconnected, communication is performed according to the power delivery PD protocol and power is adjusted.

Herein, if the power supply device does not receive the second information of the device to be charged, i.e., the handshake waveform 2, within the third time period Tretry (e.g., Tretry=400 milliseconds), the power supply device re-sends the handshake waveform 1, and the number of re-sending the U1 is no more than 3 times, and other protocols can be re-sent according to their own protocol rules.

The charging method provided in the embodiments of the present disclosure is suitable for the process of interactive charging between a power supply device and a device to be charged.

FIG. 10 is a schematic diagram of a charging method shown according to an embodiment, and as shown in FIG. 10, the method includes the following steps.

In step 1.0, the power supply device is triggered to charge the device to be charged.

The power supply device is triggered to charge the device to be charged.

In an example, the power supply device determines that it is triggered to charge the device to be charged when the power supply device monitors the insertion of the charging device.

In step 1.1, the power supply device sends a first signal through a single-wire channel.

Herein, the first signal is configured to represent the target charging protocol supported by the power supply device.

In the embodiments of the present disclosure, the power supply device is triggered to charge the device to be charged, and the power supply device sends the first signal to the device to be charged through the single-wire channel, and the device to be charged receives the first signal through the single-wire channel.

In step 1.2, the device to be charged is determined to support the target charging protocol.

In the embodiments of the present disclosure, the device to be charged determines, after the device to be charged receives the first signal, whether the target charging protocol supported by the power supply device is supported by the device to be charged. A second signal is sent in response to the first signal if the device to be charged supports the target charging protocol.

In step 1.3, the device to be charged sends a second signal through a single-wire channel.

In response to that the device to be charged supports the target charging protocol, the second signal is sent to the power supply device through the single-wire channel, and the power supply device receives the second signal through the single-wire channel.

It can be understood that the first signal is re-sent if the power supply device does not receive the second signal within a third time period. The third time period is a predetermined time period after sending the first signal.

In step 1.4, it is determined that the device to be charged supports the target charging protocol.

It can be determined that the device to be charged supports the target charging protocol after the power supply device receives the second signal.

In step 1.5, charging is performed based on the target charging protocol.

Fast charging communication based on the target charging protocol is established between the device to be charged and the power supply device through the first signal and the second signal, and the device to be charged is charged.

Through the above embodiments, the target charging protocol based on single-wire channel communication can reduce the channels needed for communication, and the single-wire channel does not occupy the D+D- channels, which is helpful to realize the scenario of simultaneously performing fast charging and USB2.0 data transmission, and the user experience is improved.

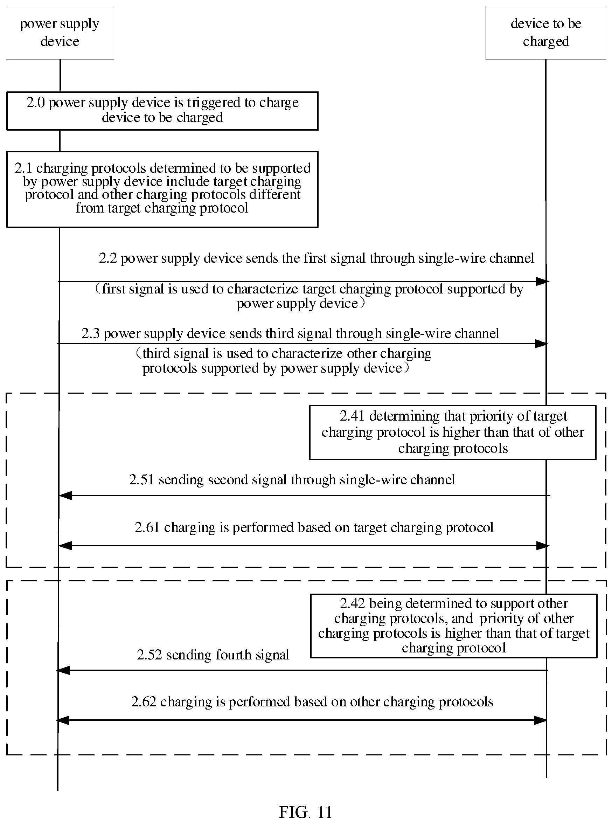

FIG. 11 is a schematic diagram of a charging method shown according to an embodiment, and as shown in FIG. 11, the method includes the following steps.

In step 2.0, the power supply device is triggered to charge the device to be charged.

In step 2.1, the charging protocols determined to be supported by the power supply device include the target charging protocol and other charging protocols different from the target charging protocol.

In addition to supporting the target charging protocol, the power supply device is also compatible with other charging protocols different from the target charging protocol.

In step 2.2, the power supply device sends the first signal through the single-wire channel within a first time period.

The first signal is configured to represent the target charging protocol supported by the power supply device.

In an example, the first signal is sent through a single-wire channel within the first time period.

Herein, the first time period is configured to ensure that sending of the third signal by the power supply device is not affected.

The power supply device sends the first signal to the device to be charged through the single-wire channel in response to that the power supply device is triggered to charge the device to be charged, and the device to be charged receives the first signal through the single-wire channel.

Herein, the device to be charged is determined to support the target charging protocol and sends a second signal.

In step 2.3, the power supply device sends a third signal through the single-wire channel.

The third signal is configured to represent other charging protocols.

In an example, the power supply device sends the third signal to the device to be charged through a single-wire channel within a second time period.

Herein, the second time period is the time period required for sending other charging protocols.

The power supply device supports the target charging protocol and other charging protocols, the power supply device sends a third signal representing other charging protocols to the device to be charged, and the device to be charged receives the third signal.

In step 2.41, the device to be charged determines that the priority of the target charging protocol is higher than the priority of other charging protocols.

In the embodiments of the present disclosure, the device to be charged is determined to support the target charging protocol and other charging protocols. The charging protocol for charging to be adopted is determined based on the respective priorities of the target charging protocol and other charging protocols.

In an example, it is determined that the priority of the target charging protocol is higher than the priority of other charging protocols if the target charging protocol is adopted for charging.

In step 2.51, the device to be charged sends a second signal through the single-wire channel.

A second signal is sent to the power supply device through the single-wire channel in response to that the device to be charged supports the target charging protocol, and the power supply device receives the second signal through the single-wire channel.

It can be determined that the device to be charged supports the target charging protocol after the power supply device receives the second signal.

It can be understood that the first signal is re-sent if the power supply device does not receive the second signal within a third time period. The third time period is a predetermined time period after sending the first signal.

In step 2.61, charging is performed based on the target charging protocol.

The device to be charged sends a second signal when the priority of the target charging protocol is higher than the priority of other charging protocols, establishes fast charging communication based on the target charging protocol, and charges the device to be charged.

For example, after the level of CC is pulled up, the PD protocol or the PD private protocol is directly disconnected, then the target charging protocol is established by performing ping communication, and thereafter the charging control is normally performed according to the target charging protocol.

In an example, it is determined that the priority of other charging protocols is higher than the priority of the target charging protocol if other charging protocols are adopted for charging.

In step 2.42, the device to be charged is determined to support other charging protocols, and the priority of other charging protocols is higher than the priority of the target charging protocol.

The fourth signal is sent to the power supply device through the single-wire channel in response to that the device to be charged supports other standard charging protocols, and the power supply device receives the fourth signal through the single-wire channel.

It can be determined that the device to be charged supports other charging protocols after the power supply device receives the fourth signal.

It can be understood that the third signal is re-sent if the power supply device does not receive the fourth signal within a fourth time period. The fourth time period is a predetermined time period after sending the third signal.

In step 2.52, the device to be charged sends the fourth signal.

In step 2.62, charging is performed based on other charging protocols.

The device to be charged sends the fourth signal to establish charging communication based on other charging protocols to charge the device to be charged, when the priority of other charging protocols is higher than the priority of the target charging protocol.

In the embodiments of the present disclosure, the device to be charged determines that the power supply device supports the target charging protocol and other charging protocols after the device to be charged receives the first signal and the third signal, and determines whether the device to be charged supports other charging protocols. The device to be charged sends a second signal to the power supply device if the device to be charged does not support other charging protocols, and the power supply device receives the second signal. If the device to be charged supports other charging protocols, the signal of the charging protocol with the highest priority is selected and sent according to the priority settings of the device to be charged for the target charging protocol and other charging protocols.

Through the above embodiments, the target charging protocol based on single-wire communication can reduce the channels needed for communication, and the single-wire channel does not occupy the D+D- channels, and the target charging protocol based on single-wire communication can achieve compatibility with other charging protocols, which is helpful to realize the scenario of simultaneously performing fast charging and USB2.0 data transmission, and the user experience is improved.

Based on the similar concept, the embodiments of the present disclosure further provide a charging apparatus.

It can be understood that, in order to realize the above functions, the charging apparatus provided by the embodiments of the present disclosure includes corresponding hardware structures and/or software modules for executing the respective functions. In combination with the units and algorithm steps of the respective examples disclosed in the embodiments of the present disclosure, the embodiments of the present disclosure can be implemented in the form of hardware or a combination of hardware and computer software. As for whether a certain function is performed by hardware or in the manner of computer software driving hardware, it depends on the specific application and design constraint of the technical solutions. Those skilled in the art can use different methods to realize the described functions for each specific application, but this realization should not be considered as beyond the scope of the technical solutions of the embodiments of the present disclosure.

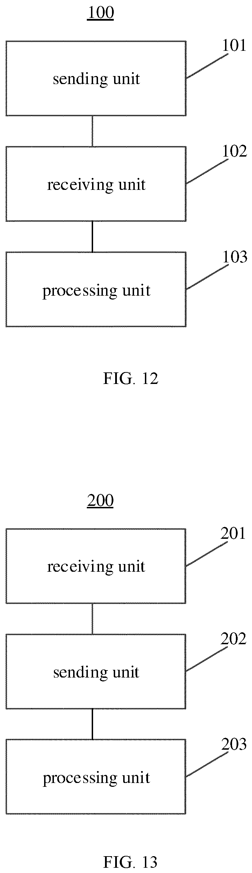

FIG. 12 is a block diagram of a charging apparatus according to an embodiment. Referring to FIG. 12, the apparatus 100 includes a sending unit 101, a receiving unit 102, and a processing unit 103.

The sending unit 101 is configured to send a first signal to a device to be charged through a single-wire channel when a power supply device is connected with the device to be charged, the first signal being configured to represent a target charging protocol supported by the power supply device.

The receiving unit 102 is configured to receive a second signal sent by the device to be charged through the single-wire channel, the second signal being a signal that the device to be charged responds to the first signal when it is determined to support the target charging protocol.

The processing unit 103 is configured to determine that the device to be charged supports the target charging protocol in response to receiving the second signal, and charge the device to be charged based on the target charging protocol.

In an embodiment, the sending unit 101 is configured to send the first signal to the device to be charged through the single-wire channel: sending the first signal to the device to be charged through the single-wire channel within a first time period.

In an embodiment, the sending unit 101 is configured to perform: sending the third signal to the device to be charged through the single-wire channel within the second time period.

In an embodiment, the sending unit 101 is further configured to perform: re-sending the first signal if the second signal is not received within a third time period; and the third time period being a predetermined time period after sending the first signal.

In an embodiment, the sending unit 101 is configured to perform sending a first signal through a single-wire channel: pulling up a level of the single-wire channel to a first level, repeating for N times to form a first signal, and sending the first signal.

In an embodiment, the processing unit 103 is configured to perform: charging the device to be charged based on the second charging protocol in response to receiving a fourth signal; and the fourth signal being a signal that responds to the third signal.

In an embodiment, prior to receiving the second signal sent by the device to be charged through the single-wire channel, the processing unit 103 is configured to perform: waiting for a second time period after sending the first signal.

In an embodiment, the charging protocol supported by the power supply device is the target charging protocol, the second time period is determined based on a communication time period, the communication time period is a time period that the power supply device communicates with the device to be charged and triggers the device to be charged to send the second signal.

In an embodiment, the charging protocol supported by the power supply device includes a first charging protocol and a second charging protocol, the first charging protocol is the target charging protocol, and the second charging protocol is other charging protocols different from the first charging protocol; and the second time period is determined based on a time period of sending a third signal by the power supply device, and the third signal is configured to represent the second charging protocol.

In an embodiment, the other charging protocols include at least one of the following: a power delivery PD protocol and a power delivery PD private protocol.

In an embodiment, the first signal is a square wave signal.

In an embodiment, the second signal is a level signal used by the power supply device to charge the device to be charged based on the target charging protocol.

In an embodiment, the second signal is a signal generated by pulling up a level of the single-wire channel to a second level and maintaining the same.

In an embodiment, the single-wire channel is a CC channel.

FIG. 13 is a block diagram of a charging apparatus according to an embodiment. Referring to FIG. 13, the apparatus 200 includes a receiving unit 201, a sending unit 202 and a processing unit 203.

The receiving unit 201 is configured to receive a first signal, the first signal is sent through a single-wire channel when a power supply device is triggered to charge a device to be charged, and the first signal is configured to represent a target charging protocol supported by the power supply device.

The sending unit 202 is configured to send a second signal to the power supply device through the single-wire channel in response to that the device to be charged supports the target charging protocol, the second signal is a signal that the device to be charged responds to the first signal when it is determined to support the target charging protocol.

The processing unit 203 is configured to perform charging based on the target charging protocol.

In an embodiment, the receiving unit 201 is configure to perform: receiving a third signal sent by the power supply device through the single-wire channel within a second time period after receiving the first signal, the third signal is configured to represent a second charging protocol; and the second charging protocol is other charging protocols different from the first charging protocol, the first charging protocol is the target charging protocol, and the charging protocol supported by the power supply device includes the first charging protocol and the second charging protocol.

In an embodiment, the receiving unit 201 is configured to perform: re-receiving the first signal.

In an embodiment, the sending unit 202 is configured to perform: sending a fourth signal if the priority of the second charging protocol is higher than the priority of the first charging protocol, the fourth signal being a signal that the device to be charged responds to the third signal when determining a support for the second charging protocol.

In an embodiment, the sending unit 202 is configured to perform: sending a fourth signal, the fourth signal being a signal that the device to be charged responds to the third signal when determining a support for the second charging protocol.

In an embodiment, the sending unit 202 is configured to perform: forming the second signal by pulling up a level of the single-wire channel to a second level and maintaining the same, and sending the second signal.

In an embodiment, in response to receiving a third signal, the processing unit 203 is configured to perform: determining priorities of the first charging protocol and the second charging protocol.

In an embodiment, prior to sending the second signal, the processing unit 203 is configured to perform: determining that the priority of the first charging protocol is higher than the priority of the second charging protocol.

In an embodiment, the other charging protocols include at least one of the following: a power delivery PD protocol and a power delivery PD private protocol.

In an embodiment, the first signal is a square wave signal.

In an embodiment, the first signal is formed by pulling up a level of the single-wire channel to a first level and repeating for N times, N being a positive integer.

In an embodiment, the second signal is a level signal used when the power supply device charges the device to be charged based on the target charging protocol.

In an embodiment, the single-wire channel is a CC channel.

The specific manners in which operations are executed by the respective modules in the apparatus of the above embodiments have been described in detail in the embodiments regarding the method, and details will not be repeated herein.

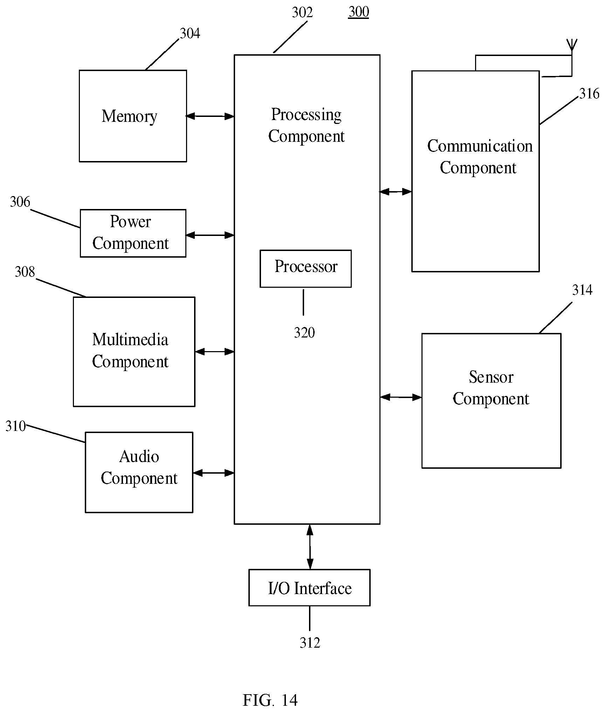

FIG. 14 is a block diagram of a device 300 for charging according to an embodiment. For example, the device 300 can be a mobile phone, a computer, a digital broadcast terminal, a messaging device, a gaming console, a tablet, a medical device, exercise equipment, a personal digital assistant, and the like.

Referring to FIG. 14, the device 300 can include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, telephone calls, data communications, camera operations, and recording operations. The processing component 302 can include one or more processors 320 to execute instructions to perform all or part of the steps in the above described methods. Moreover, the processing component 302 can include one or more modules which facilitate the interaction between the processing component 302 and other components. For instance, the processing component 302 can include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, video, etc. The memory 304 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 can include a power management system, one or more power sources, and any other components associated with the generation, management, and distribution of power in the device 300.

The multimedia component 308 includes a screen providing an output interface between the device 200 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 308 includes a front camera and/or a rear camera. The front camera and the rear camera can receive an external multimedia datum while the device 300 is in an operation mode, such as a photographing mode or a video mode. Each of the front camera and the rear camera can be a fixed optical lens system or have focus and optical zoom capability.

The audio component 310 is configured to output and/or input audio signals. For example, the audio component 310 includes a microphone ("MIC") configured to receive an external audio signal when the device 300 is in an operation mode, such as a call mode, a recording mode, and a voice recognition mode. The received audio signal can be further stored in the memory 304 or transmitted via the communication component 316. In some embodiments, the audio component 310 further includes a speaker to output audio signals.

The I/O interface 312 provides an interface between the processing component 302 and peripheral interface modules, such as a keyboard, a click wheel, buttons, and the like. The buttons can include, but are not limited to, a home button, a volume button, a starting button, and a locking button.

The sensor component 314 includes one or more sensors to provide status assessments of various aspects of the device 300. For instance, the sensor component 314 can detect an open/closed status of the device 300, relative locating of components, e.g., the display and the keypad, of the device 300, a change in position of the device 300 or a component of the device 300, a presence or absence of user contact with the device 300, an orientation or an acceleration/deceleration of the device 300, and a change in temperature of the device 300. The sensor component 314 can include a proximity sensor configured to detect the presence of nearby objects without any physical contact. The sensor component 314 can also include a light sensor, such as a CMOS or CCD image sensor, for use in imaging applications. In some embodiments, the sensor component 314 can also include an accelerometer sensor, a gyroscope sensor, a magnetic sensor, a pressure sensor, or a temperature sensor.

The communication component 316 is configured to facilitate communication, wired or wirelessly, between the device 300 and other devices. The device 300 can access a wireless network based on a communication standard, such as Wi-Fi, 2G, 3G, or a combination thereof. In one embodiment, the communication component 316 receives a broadcast signal or broadcast associated information from an external broadcast management system via a broadcast channel. In one embodiment, the communication component 316 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In embodiments, the device 300 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In embodiments, there is further provided a non-transitory computer-readable storage medium including instructions, such as included in the memory 304, executable by the processor 320 in the device 300, for performing the above described methods. For example, the non-transitory computer-readable storage medium can be a ROM, a RAM, a CD-ROM, a magnetic tape, a floppy disc, an optical data storage device, and the like.

The technical solutions provided by embodiments of the present disclosure can achieve the following advantages: when the power supply device is triggered to charge the device to be charged, the signal transmission between the power supply device and the device to be charged can realize receiving or sending through the single-wire channel, to reduce the channels required for communication and facilitates saving wires; moreover, through the target charging protocol of the present disclosure, USB2.0 data transmission based on the charging protocol of D+/D- (Data+/Data-) channel communication can be performed while single-channel fast charging is realized, and the user experience is improved.

It can be understood that "a plurality of' in the present disclosure refers to two or more, and other quantifiers are similar. The "and/or", which describes the association relationship of related objects, means that there can be three types of relationship, for example, A and/or B can mean three cases that A exists alone, A and B exist together, and B exists alone. The character "/"generally indicates that the associated objects in the context are of an "or" relationship. The singular forms "a/an", "the" and "said" are also intended to include the plural forms, unless the context clearly indicates other meaning.

It can be further understood that the terms "first" and "second" and the like are used to describe various types of information, but these information should not be limited to these terms. These terms are only used to distinguish the same type of information from each other and do not indicate a specific order or importance. In fact, the expressions "first" and "second" and the like can be used interchangeably. For example, without departing from the scope of the present disclosure, the first information can also be referred to as the second information, and similarly, the second information can also be referred to as the first information.

It can be further understood that unless otherwise specified, "connection" includes direct connection between two without other components, and also includes indirect connection between two with other components.

It can be further understood that although the operations are described in a specific order in the drawings in the embodiments of the present disclosure, it should not be understood that these operations are required to be performed in the specific order or in the serial order shown, or all the operations shown are required to be performed to obtain the desired results. In certain circumstances, multitasking and parallel processing can be beneficial.

Other embodiments of the present disclosure can be available to those skilled in the art upon consideration of the specification and practice of the various embodiments disclosed herein. The present disclosure is intended to cover any variations, uses, or adaptations of the present disclosure following general principles of the present disclosure and including the common general knowledge or conventional technical means in the art. The specification and embodiments can be shown as illustrative only, and the true scope of the present disclosure is indicated by the following claims.

It will be understood that the present disclosure is not limited to the exact construction that has been described above and illustrated in the accompanying drawings, and that various modifications and changes can be made without departing from the scope thereof. It is intended that the scope of the present disclosure is limited only by the appended claims.

## Claims

1. A charging method, applied to a power supply device, comprising:
sending (S101) a first signal to a device to be charged through a single-wire channel in response to determining that the power supply device is connected with the device to be charged, wherein the first signal is configured to represent a target charging protocol supported by the power supply device;
receiving (S102) a second signal sent by the device to be charged through the single-wire channel, wherein the second signal is a signal that the device to be charged responds to the first signal in response to determining to support the target charging protocol; and
determining (S103) that the device to be charged supports the target charging protocol in response to receiving the second signal, and charging the device to be charged based on the target charging protocol.

2. The method according to claim 1, wherein sending the first signal to the device to be charged through the single-wire channel comprises:
sending the first signal to the device to be charged through the single-wire channel within a first time period.

3. The method according to claim 1 or 2, wherein prior to receiving the second signal sent by the device to be charged through the single-wire channel, the method further comprises:
waiting for a second time period after sending the first signal.

4. The method according to claim 3, wherein the charging protocol supported by the power supply device is the target charging protocol, the second time period is determined based on a communication time period, and the communication time period is a time period that the power supply device communicates with the device to be charged and triggers the device to be charged to send the second signal, or
wherein the charging protocol supported by the power supply device comprises a first charging protocol and a second charging protocol, the first charging protocol is the target charging protocol, and the second charging protocol is other charging protocols different from the first charging protocol; and
the second time period is determined based on a time period of sending a third signal by the power supply device, and the third signal is configured to represent the second charging protocol.

5. The method according to claims 3 or 4, wherein the method further comprises:
sending (S602) the third signal to the device to be charged through the single-wire channel within the second time period.

6. The method according to claim 4 or 5, wherein the method further comprises:
charging (S402) the device to be charged based on the second charging protocol in response to receiving a fourth signal; and
the fourth signal being a signal that responds to the third signal.

7. The method according to any of claims 4 to 6, wherein the other charging protocols comprise at least one of following protocols: a power delivery (PD) protocol or a PD private protocol.

8. The method according to any of claims 1 to 7, wherein the method further comprises:
re-sending (S702) the first signal in response to determining that the second signal is not received within a third time period, wherein the third time period is a predetermined time period after sending the first signal.

9. The method according to any of claims 1 to 8, wherein sending a first signal through a single-wire channel comprises:
pulling up a level of the single-wire channel to a first level, repeating for N times to form a first signal, and sending the first signal, wherein N is a positive integer.

10. The method according to any of claims 1 to 9, wherein the second signal is a level signal used by the power supply device to charge the device to be charged based on the target charging protocol, or
the second signal is generated by pulling up a level of the single-wire channel to a second level and maintaining the same.

11. A charging method, applied to a device to be charged, comprising:
receiving a first signal (S901), wherein the first signal is sent through a single-wire channel in response to determining that a power supply device is triggered to charge a device to be charged, and the first signal being configured to represent a target charging protocol supported by the power supply device;
sending (S902) a second signal to the power supply device through the single-wire channel in response to determining that the device to be charged supports the target charging protocol, wherein the second signal is a signal that the device to be charged responds to the first signal in response to determining to support the target charging protocol; and
performing (S903) charging based on the target charging protocol.

12. The method according to claim 11, wherein the method further comprises:
receiving (S1002) a third signal sent by the power supply device through the single-wire channel within a second time period after receiving the first signal, the third signal being configured to represent a second charging protocol, wherein
the second charging protocol is other charging protocols different from the first charging protocol, the first charging protocol is the target charging protocol, and the charging protocol supported by the power supply device comprises the first charging protocol and the second charging protocol.

13. The method according to claim 12, wherein the method further comprises:
determining (S1102) priorities of the first charging protocol and the second charging protocol in response to receiving the third signal; and
sending (S1103) a fourth signal in response to determining that the priority of the second charging protocol is higher than the priority of the first charging protocol, wherein the fourth signal is a signal that the device to be charged responds to the third signal in response to determining to support the second charging protocol.

14. A charging apparatus, comprising:
a processor;
a memory for storing instructions executable by the processor;
wherein the processor is configured to implement the charging method according to any of claims 1 to 13.

15. A non-transitory computer-readable storage medium, having stored thereon instructions, wherein the instructions are executed by a processor of a power supply device, enabling the power supply device to execute the charging method according to any of claim 1 to 13.
